Europäisches Patentamt

European Patent Office

Office européen des brevets

(19)

(11) Numéro de publication: **0 091 852**
**B1**

(12) # FASCICULE DE BREVET EUROPEEN

(45) Date de publication du fascicule du brevet:
23.04.86

(51) Int. Cl.⁴: **F 02 K 9/56**

(21) Numéro de dépôt: **83400640.5**

(22) Date de dépôt: **28.03.83**

(54) **Procédé de régulation du rapport de mélange des propergols pour un moteur à propergols liquides.**

(30) Priorité: **08.04.82 FR 8206202**

(43) Date de publication de la demande:
**19.10.83 Bulletin 83/42**

(45) Mention de la délivrance du brevet:
**23.04.86 Bulletin 86/17**

(84) Etats contractants désignés:
**BE CH DE FR GB IT LI LU NL**

(56) Documents cités:
**FR - A - 1 156 430**
**FR - A - 1 276 442**
**US - A - 2 816 417**
**US - A - 3 058 303**
**US - A - 3 073 110**

(73) Titulaire: **CENTRE NATIONAL D'ETUDES SPATIALES, 2, Place Maurice Quentin, F-75001 Paris (FR)**

(72) Inventeur: **Scheller, Alfred Kurt, 14, Rue Fernand Forest, F-91120 Palaiseau (FR)**

(74) Mandataire: **de Boisse, Louis et al, CABINET DE BOISSE 37, Avenue Franklin D. Roosevelt, F-75008 Paris (FR)**

## Description

L'invention concerne un procédé de régulation du rapport de mélange des propergols pour un moteur à propergòls liquides, par mesures des débits et, en particulier, pour un moteur cryogénique consistant à mesurer le débit des propergols à la sortie de turbopompes, à le comparer à une valeur de consigne et à agir sur la vitesse des turbines des turbopompes, et des régulateurs pour sa mise en oeuvre.

Les moteurs d'un lanceur ou des étages successifs d'un lanceur sont prévus pour fonctionner pendant une certaine durée correspondant à la combustion de masse déterminées de propergols. Le rapport de mélange des propergols doit être maintenu dans certaines limites correspondant à la poussée maximale. Théoriquement, toute la masse de propergols contenus dans les réservoirs doit être utilisée à l'extinction du moteur et ce résultat pourrait être obtenu par un fonctionnement prédéterminé des turbopompes. Pratiquement, les variations de température et de pression que subissent les éléments du moteur nécessitent une mesure de la masse des propergols à la sortie des turbopompes. Ces mesures, données par des débitmètres, corrigées de la température et de la pression, sont comparées à une valeur de consigne d'un mélange optimal de propergols et les écarts détectés commandent les moteurs de vannes placées sur le circuit d'alimentation des générateurs de gaz des turbopompes. L'épuisement plus ou moins complet des propergols dépendra donc, pour une large part, de la précision des mesures qui est directement liée à celle des débitmètres. Dans l'état actuel de la technique, il n'est pas possible d'obtenir des mesures à mieux de 1% et ce avec des débitmètres à ailettes qui sont des appareils relativement fragiles ne pouvant être soumis à des dépassements de la vitesse maximale admissible. Ces dépassements se produisent en particulier dans les moteurs cryogéniques, lors de la mise en froid par suite de la vaporisation des liquides. Il est donc nécessaire, pour éviter la détérioration des débitmètres, de prévoir des dispositions particulières.

La navette spatiale américaine met en oeuvre un procédé de régulation du rapport de mélange des propergols en boucle fermée, semblable à celui précédemment décrit, et est, par conséquent, tributaire de la précision des mesures de débit.

L'emploi de débitmètres, même précis, ne garantit pas un épuisement complet des propergols et la perte de propergols peut facilement atteindre plusieurs centaines de kilogrammes. Les quantités de propergols non utilisées diminuent les performances de l'étage, la masse finale étant plus importante que prévue, et oblige à une diminution de la charge utile.

On connaît du brevet FR-A-1 156 430 un régulateur mécanique de débit ou de pression permettant de maintenir le rapport de combustion optimal pendant le temps de fonctionnement total de la fusée et assurant théoriquement l'épuisement total des propergols, mais ce dispositif est inutilisable avec des propergols cryogéniques.

Le brevet US-A-2 816 417 décrit un dispositif de réglage de la vitesse de chacune des turbopompes alimentant un réacteur cryogénique composé de deux régulateurs contrôlant l'arrivée du carburant à chacun des générateurs de gaz entraînant la turbine de chacune des pompes. Un des régulateurs est commandé par la pression du comburant prise à la sortie de la pompe, l'autre régulateur est commandé par la différence des pressions du carburant et du comburant prises à la sortie des pompes. Ce dispositif ne tient pas compte des volumes de propergols restant dans les réservoirs et ne peut assurer leur épuisement total.

Le brevet US-A-3 058 303 décrit un système de contrôle du rapport carburant comburant par mesure du volume des propergols restant dans les réservoirs. Le volume est déterminé par des éléments résistants électriques et le rapport est obtenu par un montage en pont de Wheastone. Le déséquilibre du pont commande le débit d'alimentation de la pompe. Etant donné les variations de température et de pression des propergols contenus dans les réservoirs, l'alimentation optimale du réacteur n'est pas assurée.

Le procédé de régulation du rapport de mélange des propergols, selon l'invention, vise à assurer l'épuisement complet des propergols quelles que soient les perturbations au cours du fonctionnement et les dispersions fonctionnelles des composants du moteur et ce, en maintenant le rapport de mélange dans un domaine compatible avec un fonctionnement du moteur au voisinage de ses performances maximales.

L'invention concerne également des moyens pour la mise en oeuvre du procédé.

Les explications et figures données ci-après à titre d'exemple permettront de comprendre comment l'invention peut être réalisée.

La figure 1 représente un ensemble de propulsion pour un lanceur spatial.

La figure 2 montre schématiquement un exemple de circuit d'alimentation d'un moteur cryogénique à flux dérivé.

La figure 3 montre schématiquement un exemple de circuit d'alimentation d'un moteur cryogénique à flux intégré.

La figure 4 est le schéma fonctionnel d'un moteur à flux dérivé à un seul générateur de gaz.

La figure 5 est le schéma fonctionnel d'un moteur à flux dérivé à deux générateurs de gaz.

La figure 6 est le schéma fonctionnel d'un moteur à flux intégré à deux préchambres de combustion.

La figure 7 est un schéma fonctionnel condensé d'un moteur dont les turbopompes sont alimentées séparément par des générateurs de gaz ou des préchambres de combustion.

La figure 8 est une variante du schéma de la figure 4.

La figure 9 est une variante du schéma de la figure 5.

La figure 10 est une variante du schéma de la figure 6.

La figure 11 est une variante du schéma de la figure 7.

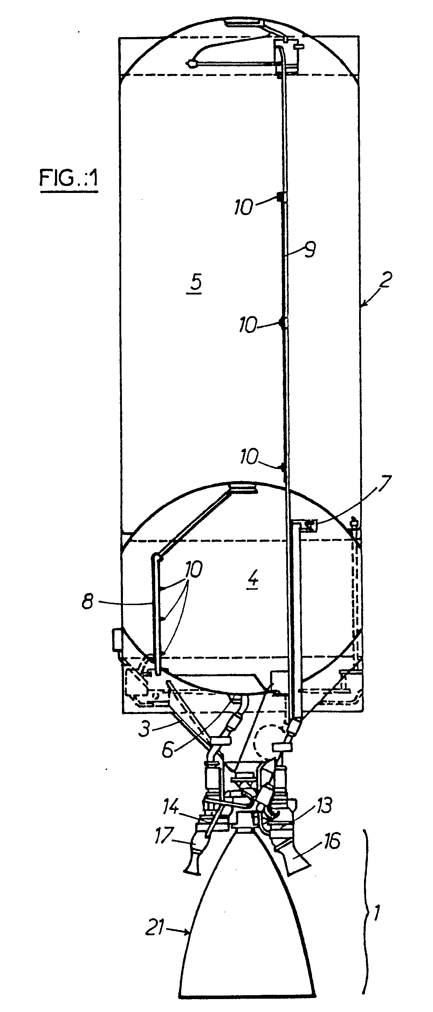

La figure 1 représente schématiquement en coupe partielle un ensemble de propulsion comportant un moteur fusée 1 à propergols et, en particulier, à propergols cryogéniques et ses réservoirs 2 d'alimentation. Le moteur, du type à flux dérivé, sont monté de façon classique sur la structure qui comprend l'armature 3 et l'enveloppe des réservoirs 2. Les réservoirs d'oxygène liquide 4 et d'hydrogène liquide 5 sont disposés coaxialement et comportent, à leurs parties inférieures, de manière connue, les connecteurs de remplissage en oxygène et hydrogène liquides 6 et 7. Les réservoirs sont munis, selon leur hauteur, de lignes à gaz 8 et 9 débouchant à leurs parties supérieures et servant à la pressurisation.

Selon une caractéristique de l'invention, ces lignes servent de support à des détecteurs de niveaux 10 qui peuvent éventuellement être utilisés comme sondes de remplissage.

Le schéma hydraulique d'un moteur à flux dérivé est montré figure 2. Les turbines 11 et 12 des turbopompes à hydrogène liquide L H 2 et à oxygène liquide L O X 13 et 14 sont actionnées par les gaz produits par la combustion de propergols à faible rapport de mélange dans un générateur de gaz 15. Ces gaz sont ensuite éjectés directement par des tuyères secondaires 16 et 17 pour fournir une force propulsive d'impulsion spécifique de propulsion (I S P) faible. Le débit des propergols dans le générateur de gaz doit être le plus faible possible par rapport au débit total ($\simeq$ 4%), les turbines fonctionnent donc à faible débit et fort taux de détente.

Les propergols pompés dans les réservoirs 4 et 5 sont envoyés soit directement dans la chambre de combustion 18 du moteur par la canalisation 19, soit indirectement par la canalisation 20, une partie de l'hydrogène servant au refroidissement du divergent de la tuyère principale 21 et de la chambre de combustion du moteur. Des dérivations 22 et 23 prévues sur les canalisations principales 19 et 20 amènent les propergols au générateur de gaz 15 dont la sortie est reliée par la canalisation 24 aux turbines 11 et 12. Un dispositif de réglage 25, constitué d'un diaphragme à orifice calibré et/ou d'une vanne réglable, permet de contrôler les débits de gaz alimentant les turbines. Les lignes à gaz 8 et 9 sont branchées en dérivation respectivement sur le refroidissement de la chambre 18 et sur la canalisation d'oxygène 19. Les canalisations d'amenée des propergols au générateur de gaz ou à la préchambre de combustion sont munies de vannes d'injection qui sont actionnées lors de la mise en marche du moteur. Ces vannes sont désignées sur les figures par des indices à trois chiffres commençant par 26. Ces mêmes canalisations portent des dispositifs de réglage, désignés par des indices à trois chiffres commençant par 27, permettant le contrôle des débits de propergols.

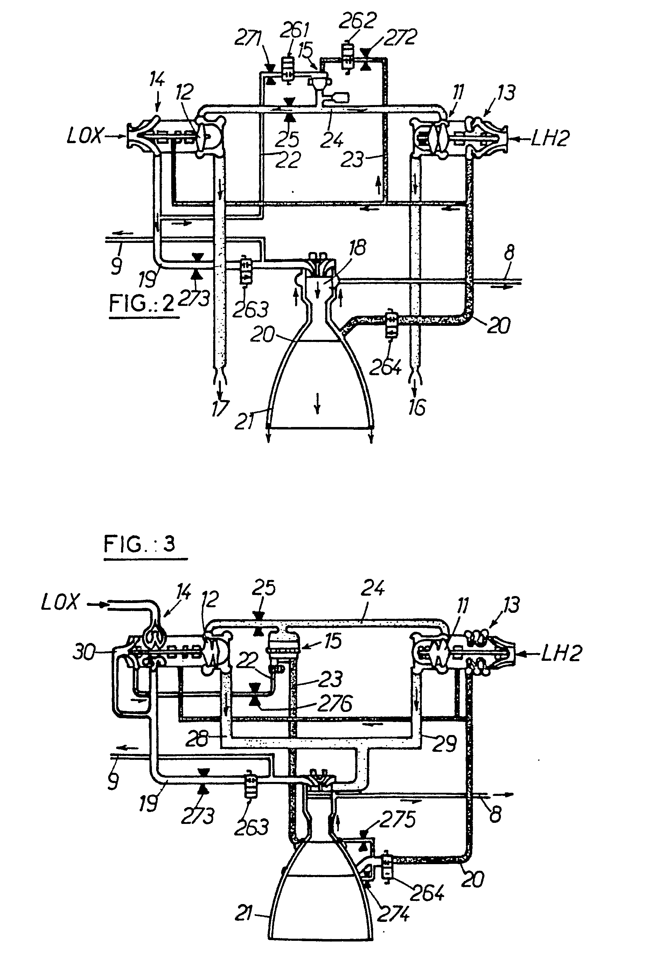

La figure 3 montre le schéma hydraulique d'un moteur à flux intégré. Les éléments semblables à ceux de l'exemple précédent portent les mêmes références. Dans un tel moteur, les gaz ayant actionné les turbines sont conduits par les canalisations 28 et 29 dans la chambre de combustion 18 où ils sont rebrûlés pour fournir une I S P maximale. Le débit dérivé du débit principal dans le générateur de gaz 15 est important ($\simeq$ 30%) et le taux de détente dans les turbines 11 et 12, faible. Les pressions dans le générateur de gaz et en sortie des turbines sont élevées et supérieures à la pression dans la chambre de combustion.

L'hydrogène liquide L H 2 sous pression est envoyé par la canalisation principale 20 dans un système de distribution comportant une vanne d'injection 264 et deux dérivations à diaphragme 274, 275, assurant le refroidissement du divergent de la tuyère 21 et de la chambre de combustion 18, ainsi que son alimentation.

Une partie de l'hydrogène liquide alimente, par la canalisation 23, le générateur de gaz 15. La quantité d'hydrogène étant importante, il est nécessaire de fournir au générateur une quantité d'oxygène liquide à un débit et une pression suffisante. Pour ce faire, l'oxygène prélevé à la sortie de la pompe est repris par un étage séparé 30 de pompe entraînée par la turbine 12 et, après son passage dans un dispositif de réglage 276, envoyé dans le générateur 15.

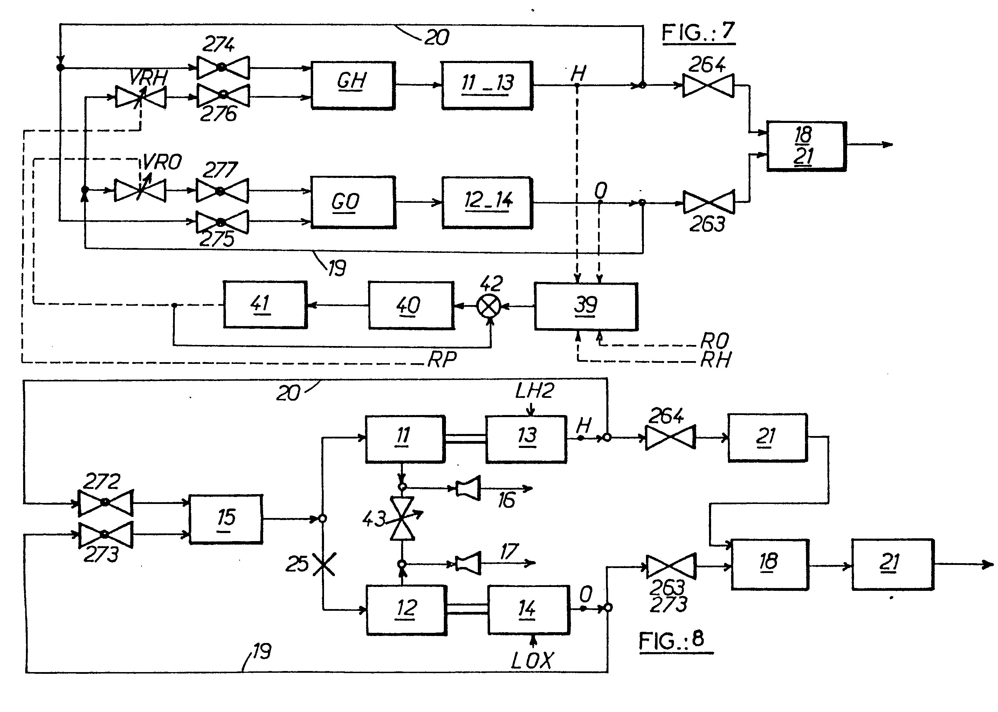

Les quantités de propergols nécessaires à l'alimentation d'un générateur de gaz unique étant relativement importantes dans un moteur à flux intégré et la pression du gaz étant forte, le contrôle de la vitesse des turbines et, par conséquent, des débits des pompes, est difficile et, en pratique, chaque turbine est alimentée par un générateur séparé comme il sera décrit ultérieurement en regard du schema fonctionnel simplifié de la figure 7.

Le procédé de régulation du rapport de mélange des propergols pour un moteur à propergols liquides, selon l'invention, est appliqué à la régulation des moteurs à flux dérivé ou intégré à un ou deux générateurs de gaz comme décrit ci-dessus, mais également à des moteurs à une ou deux préchambres de combustion comme décrit ultérieurement.

D'une manière générale, les générateurs de gaz ou les préchambres de combustion ont pour fonction de fournir le gaz d'entraînement des turbines des turbopompes à un débit et une pression suffisante.

Ces débit et pression dépendent du type de moteur à flux intégré ou flux dérivé et il est théoriquement possible, quel que soit le type de moteur, d'alimenter les deux turbines par un seul générateur de gaz d'entraînement, ou chacune des turbines par un générateur de gaz d'entraînement indépendant, le terme générateur de gaz d'entraînement étant pris ici dans son acceptation la plus large par exemple de générateur de gaz ou de préchambre de combustion.

Le procédé de régulation, selon l'invention, comporte les opérations suivantes:

— la mesure du débit des propergols à la sortie H et O des turbopompes;

— la comparaison du rapport des débits mesurés à une valeur de consigne correspondant à la valeur optimale du mélange, la valeur de consigne étant au moins périodiquement modifié en fonction des volumes de propergols restant dans les réservoirs;

— la modification du débit de gaz d'entraînement alimentant au moins une des turbopompes en fonction de l'écart entre le rapport des débits mesurés des propergols et la valeur de consigne, de manière à obtenir l'épuisement total des propergols à l'arrêt du fonctionnement du moteur.

La modification directe ou indirecte du débit du gaz d'entraînement alimentant au moins des turbopompes est obtenue, selon une variante du procédé, par modification des débits de propergols alimentant au moins un des générateurs de gaz d'entraînement d'une turbopompe.

La mise en oeuvre de ce procédé sera miex comprise en se référant aux schémas fonctionnels ci-après expliqués.

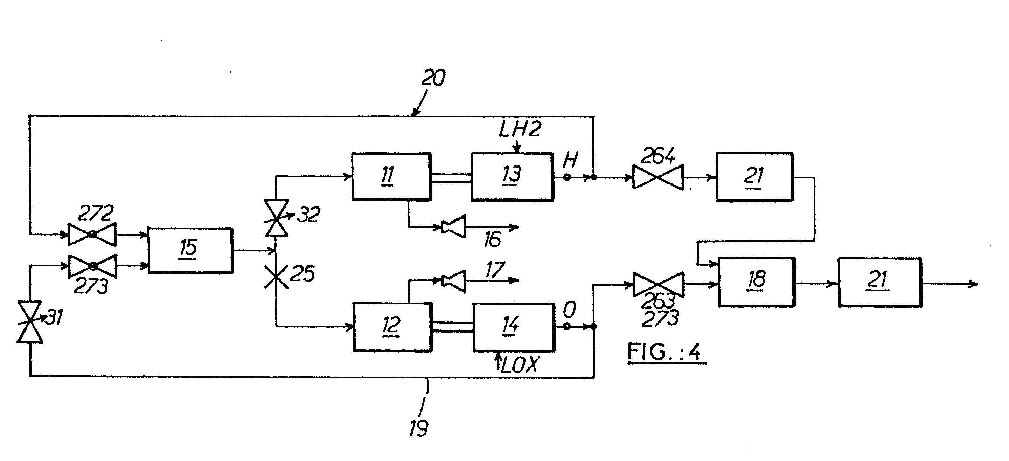

Le schéma fonctionnel du moteur à flux dérivé, représenté figure 4, correspond au schéma hydraulique du moteur représenté figure 2. Les éléments correspondants portent les mêmes références. Les débits des propergols alimentant la chambre de combustion 18 sont mesurés à la sortie des pompes 13 et 14 et un signal de commande, tenant compte d'un certain nombre de paramètres, ultérieurement précisés, est produit par un dispositif régulateur pour agir sur le moteur d'au moins une vanne de réglage d'un des propergols alimentant le générateur de gaz et/ou sur la vanne de réglage placée dans le circuit d'alimentation en gaz d'une des turbines. Généralement, on contrôle le propergol dont le débit est le plus faible et, en particulier, l'oxygène liquide dont le débit est notablement plus faible que celui de l'hydrogène. Pour ce faire, on utilise une vanne de réglage 31 montée en amont du diaphragme à orifice calibré 273. L'alimentation en hydrogène est contrôlée par un diaphragme 272. Le contrôle sur l'oxygène permet d'ajuster la quantité totale de gaz produit servant à l'entraînement des turbines, donc agit sur la poussée, mais ne permet pas d'agir indépendamment sur la vitesse de chacune des turbines, donc sur le débit des pompes. Les quantités de gaz distribuées à chaque turbine sont fixées par un diaphragme 25 disposé par exemple sur la canalisation de gaz alimentant la turbine 12 de la pompe à oxygène 14. Le réglage indépendant du débit des pompes est obtenu par une vanne de réglage 32 disposée, par exemple, sur l'alimentation en gaz de la turbine 11 de la pompe à hydrogène 13. La vanne 31 agit sur le débit total des propergols envoyés dans la chambre de combustion, tandis que la vanne 32, commandée par un régulateur mettant en oeuvre le procédé selon l'invention, agit plus particulièrement sur le rapport des débits des deux propergols.

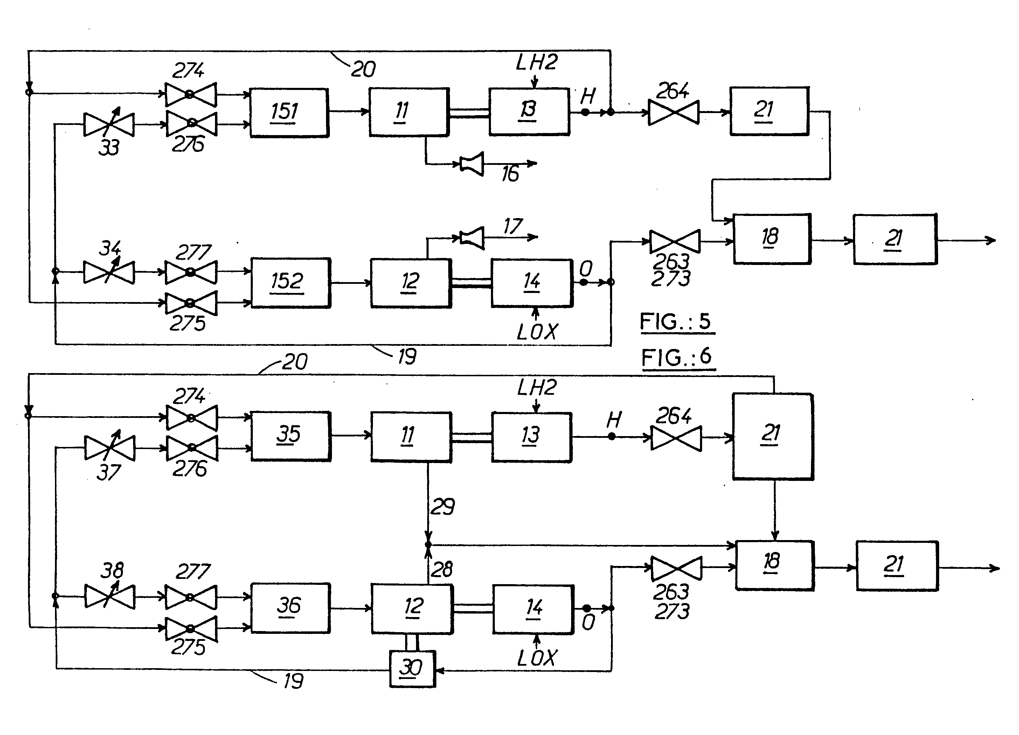

Le schema de la figure 5 correspond au mode de fonctionnement d'un moteur à flux dérivé semblable à celui des figures 2 et 4, mais avec deux générateurs de gaz séparés 151, 152. Chaque générateur est alimenté en parallèle respectivement sur les canalisations d'hydrogène 20 et d'oxygène 19 par l'intermédiaire des diaphragmes 274, 275, 276, 277. En amont des diaphragmes 276 et 277 sont prévues des vannes de réglage 33 et 34 dont au moins une est contôlée par un régulateur du rapport de mélange des propergols mettant en oeuvre le procédé conforme à l'invention, l'autre vanne étant éventuellement commandé par un régulateur de poussée.

La figure 6 est un schéma fonctionnel d'un moteur à flux intégré semblable à celui représenté figure 3, mais dans lequel chaque turbopompe 11, 12 est équipée d'une préchambre de combustion 35, 36 au lieu d'un générateur de gaz. Le contrôle des propergols est assuré, comme dans l'exemple de la figure 5, par des vannes de réglage 37, 38 prévues sur l'alimentation en oxygène des préchambres de combustion. Au moins l'une des vannes, par exemple celle assurant l'alimentation de la turbopompe d'oxygène liquide, est contrôlée par un regulateur mettant en oeuvre le procédé conforme à l'invention, l'autre vanne étant éventuellement commandée par un régulateur de poussée.

La figure 7 présente un schema fonctionnel condensé d'un moteur à flux intégré ou à flux dérivé correspondant à ceux des figures 5 et 6, les éléments semblables portant les mêmes références.

Les turbopompes 11-13, 12-14 sont alimentées séparément per les générateurs de gaz ou les préchambres de combustion GH, GO, qui sont équipés de vannes de réglage VRH et VRO. Les mesures de débit sont faites à la sortie des pompes 11-13, 12-14 en H et O et les valeurs obtenues sont traitées dans un dispositif électronique 39 de traitement des mesures où leur rapport est comparé à une valeur de consigne correspondant à une valeur du mélange des propergols comprise dans une plage pour laquelle le fonctionnement du moteur est considéré comme optimal. La valeur de consigne est modifiée au moins périodiquement par les mesures RO, RH des niveaux de propergols restant dans chacun des réservoirs d'oxygène et d'hydrogène de manière à obtenir l'épuisement total des propergols à la fin du fonctionnement du moteur, cette valeur de consigne restant dans la plage de fonctionnement optimal.

Le signal de commande produit par le dispositif électronique agit sur un dispositif amplificateur 40 qui commande un dispositif moteur 41 de réglage de la vanne VRO.

Selon que le type de commande adoptée est électrique, le signal de commande sera repris par un amplificateur électronique 40 pour actionner le moteur 41 de la vanne VRO proportionellement au signal, ou fluidique, le signal de commande actionnera une servovanne asservie en position 42-40 qui alimentera un vérin 41 de commande de la vanne VRO.

Selon un exemple de réalisation préféré, la mesure des niveau de propergols dans les réservoirs est limitée à des détections discrètes de niveau faites par les détecteurs de niveau 10 (figure 1). De ce fait, la valeur de consigne reste constante entre deux détections.

Une bonne précision avec une stabilité satisfaisante est obtenue en complétant les fonctions du dispositif électronique 39 d'un réseau correcteur tenant compte des inerties des turbopompes et de l'inertie thermique de la chambre de combustion ainsi que de celle des générateurs de gaz ou des préchambres de combustion.

La modification du rapport de mélange des propergols sur un seul des générateurs de gaz ou des préchambres de combustion produit une variation de la poussée du moteur. Cette variation, bien que faible, peut être gênante et nécessiter des moyens de contrôle du mélange de propergols sur l'autre générateur ou chambre. Ces moyens sont constitués par un régulateur de poussée RP qui agit sur la vanne de réglage VRH.

Le régulateur de rapport de mélange, conforme à l'invention, comporte un dispositif électronique 39 de traitement des mesures, au moins un détecteur de niveau 10 dans les réservoirs transmettant des signaux au dispositif électronique, des débitmètres H, O disposés à la sortie des pompes à propergol alimentant la chambre de combustion 18 du moteur, transmettant les mesures au dispositif électronique, un dispositif amplificateur 40 recevant un signal de commande élaboré par le dispositif électronique, un dispositif moteur 41 et une vanne de réglage VRO ou 32 (figure 4) contrôlant directement ou indirectement le débit de gaz d'entraînement d'au moins une turbopompe, ladite vanne étant actionnée par le dispositif moteur, et une source de puissance associée (génératrice ou pile électrique, pompe hydraulique, moteur pneumatique, etc.).

Selon des formes de réalisation différentes du régulateur, la vanne de réglage est placée dans une canalisation d'alimentation en propergol d'au moins un des générateurs de gaz ou une des préchambres de combustion (figures 5, 6, 7), — ou dans une canalisation d'alimentation en gaz d'entraînement d'une turbopompe (figure 4).

Le procédé de réglage du rapport de mélange des propergols, selon l'invention, est applicable aussi bien à des mesures de débit massique qu'à mesures de débit volumétrique. Bien que l'évolution des rapports de mélange ne soit pas le même dans les deux cas, les écarts resteront faibles puisque le procédé de réglage classique avec valeur de consigne fixe avait pour but l'épuisement des propergols. La mesure des températures et des pressions dans les réservoirs et au niveau des mesures de débit permettait de corriger les débits massiques mesurés de manière que leur rapport puisse être comparé, dans les mêmes conditions, à la valeur de consigne.

Il en sera de même dans le procédé selon l'invention, pour une valeur de consigne correspondant au rapport massique. Les températures et les pressions dans les réservoirs et au niveau des mesures de débits doivent alors être prises en compte pour l'élaboration du signal de commande produit par le dispositif électronique de traitement des mesures. Dans le cas où la valeur de consigne correspond au rapport de mélange volumétrique des propergols, les mesures de température et de pression ne sont plus nécessaires.

Le procédé permet d'utiliser des débitmètres dont la précision ne joue pas un rôle important dans l'obtention du résultat, seules la fidélité et la sensibilité étant nécessaires. Ces qualités sont courantes dans les débitmètres classiques. En particulier, il est possible d'utiliser des débitmètres à venturi, ne comportant aucune pièce mobile et, par conséquent, susceptibles d'être soumis à des écarts importants de vitesse du fluide les traversent. Ces conditions se produisent lors de la mise en froid du moteur. La redondance obligatoire des appareils de mesure est résolue par la formation de plusieurs sorties de mesure dans le corps du débitmètre, et ce sans augmentation sensible de la masse. L'erreur due à la précision des débitmètres est considérée comme une perturbation d'ensemble au même titre que les dispersions fonctionnelles des composants du moteur et le réajustement de la valeur de consigne du rapporte de mélange en tient compte.

Le régulateur du rapport de mélange, tel que précédemment décrit, apporte lors de son fonctionnement une légère variation de la poussée du moteur. Cette influence peut être annulée en modifiant l'implantation de la vanne de réglage du régulateur dans les systèmes d'alimentation en propergols de la chambre de combustion du moteur.

Selon cette modification, la vanne de réglage relie deux éléments correspondants des deux systèmes d'alimentation en propergols du moteur, la pression ou le débit dans un des systèmes étant plus élevé que dans l'autre.

Par système d'alimentation en propergols, il faut comprendre un générateur de gaz ou préchambre de combustion, qu'il alimente une ou deux turbines, son alimentation en propergols, une turbopompe et son alimentation en gaz d'entraînement ou son échappement.

Selon la forme de réalisation du régulateur représenté figure 8, la vanne de réglage 43 est disposée à la sortie des turbines 11 et 12 entraînant les pompes 13 et 14 d'alimentation en propergols, un moteur à flux dérivé comportant un seul générateur de gaz ou préchambre de combustion 15. Les éléments semblables à ceux de la figure 4 portent les mêmes références.

Dans le moteur cryogénique de l'exemple, le débit de l'hydrogène devant être supérieur à celui de l'oxygène, la turbine 11 sera alimentée en gaz à un débit ou à une pression supérieure à celle de la turbine 12. Toutefois, quel que soit le type de propergols utilisés, il sera toujours possible d'adapter les éléments d'un système d'alimentation de manière à avoir une différence de pression ou de débit entre les deux éléments interconnectés. Cette différence se traduit, lorsqu'il n'y a pas intervention de la vanne de réglage, par une circulation à débit constant, dont il est tenu compte pour l'alimentation de chaque turbopompe, par exemple, par réglage du diaphragme 25.

En agissant sur la vanne de réglage, on fait varier la répartition des niveaux d'énergie des turbines qui vont évoluer dans des sens opposés. Il en résulte une action additive sur le rapport de mélange en sortie des pompes et une action soustractive sur la poussée.

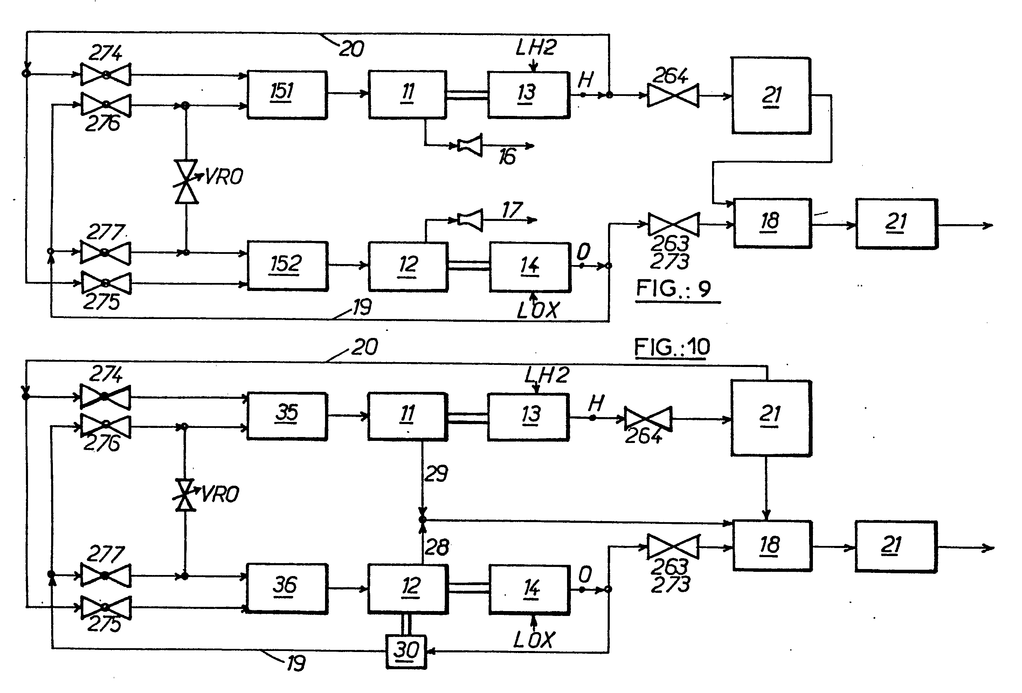

La figure 9 montre un exemple d'implantation de la vanne de réglage pour un moteur à flux dérivé à deux générateurs de gaz ou préchambres de combustion. La vanne relie les canalisations d'alimentation en un même propergol de chacun des deux systèmes d'alimentation du moteur, entre les diaphragmes à orifice calibré 276-277 et les générateurs 151-152. Les diaphragmes sont prévus de manière à permettre une circulation du propergol, vanne ouverte, entre les deux systèmes sans modification du rapport de mélange initial des propergols alimentant les générateurs ou les préchambres 151-152.

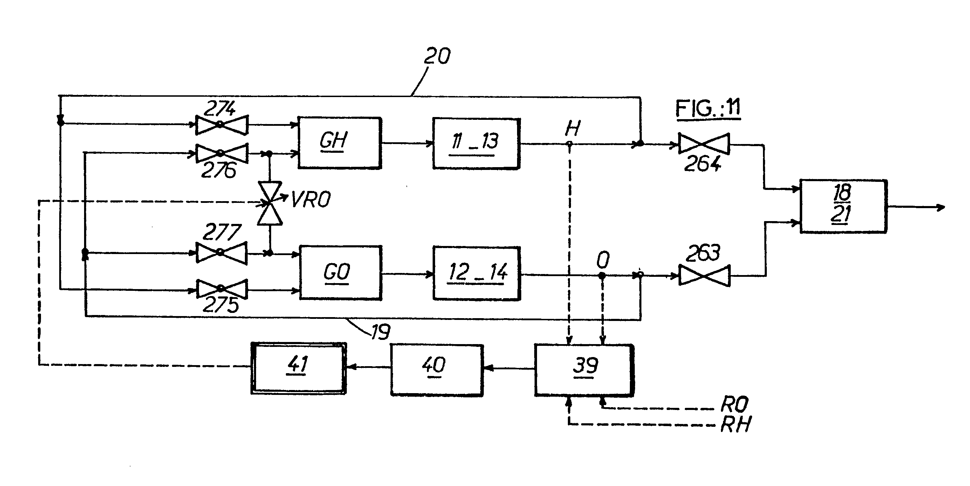

La figure 10 montre un exemple d'implantation de la vanne de réglage pour un moteur à flux intégré. Les mêmes remarques que pour la figure précédente s'appliquent dans ce cas.

L'implantation de la vanne de réglage entre les alimentations en un même propergol des générateurs ou préchambres présente l'avantage de contrôler un débit faible et, par conséquent, ne nécessite qu'une vanne de faible encombrement et de réalisation simple. Toutefois, comme il a été précédemment évoqué, la vanne peut être placée entre les canalisations de gaz d'entraînement, mais la température de celui-ci exige alors une vanne de caractéristiques particulières.

Dans les exemples précédents, le réglage de l'évolution de la poussée en fonction du déplacement de la vanne de réglage du rapport de mélange peut être obtenu par un dispositif à perte de charge calibré (par exemple diaphragme) dans la canalisation en aval des connexions de la vanne de réglage.

La figure 11 montre le régulateur de rapport de mélange des propergols avec sa vanne de réglage montée, dans un cas général de moteur à deux générateurs ou préchambres, entre les canalisations d'un même propergol de deux systèmes d'alimentation.

Le mode de fonctionnement du régulateur est en tout point identique à celui décrit par rapport à la figure 7 et les éléments semblables portent les mêmes références.

Le dispositif électronique 39 de traitement des mesures compare le rapport des mesures des débits des propergols H et O à la valeur de consigne qui est modifiée au moins périodiquement en fonction des niveaux de propergols RO et RH restant dans les réservoirs. A partir de ces mesures, il élabore un signal de commande qui est amplifié dans un amplificateur 40 pour commander le dispositif moteur 41 de la vanne de réglage VRO.

Dans les régulateurs précédemment décrits, le signal de commande provenant du dispositif électronique de traitement des mesures agit sur un système asservi linéaire: moteur à deux sens de rotation ou moteur couple ou servovanne asservie en position. De tels systèmes conviennent plus particulièrement pour les cas de figures 4 à 7 dans lesquels il n'est pas souhaitable d'agir par plus ou moins. Par contre, dans les cas de figures 8 à 11, un réglage par plus ou moins peut être envisagé par l'utilisation d'un système asservi non linéaire.

Un organe non linéaire du type plus ou moins permet au système de travailler toujours au maximum de ses possibilités. En outre, le dispositif électronique de traitement des mesures peut optimiser les moments de commutation en adressant les ordres de commande à l'organe plus ou moins, à des instants définis par une courbe de commutation.

Le régulateur avec un élément non linéaire permet l'utilisation d'organes plus simples, en remplaçant les servovannes et leur source de puissance (moteur électrique ou vérin hydraulique) par un relais électronique et une électrovanne.

## Revendications

1. Procédé de régulation du rapport de mélange des propergols pour un moteur à propergols liquides, par mesure des débits, et plus particulièrement pour un moteur cryogénique, consistant à mesurer le débit des propergols à la sortie de turbopompes, à le comparer à une valeur de consigne et à agir sur la vitesse des turbines de turbopompes, caractérisé en ce qu'il comporte les opérations suivantes:

a) mesure des débits des propergols à la sortie des turbopompes;

b) comparaison du rapport des débits mesurés à une valeur de consigne correspondant à la valeur optimale du mélange, la valeur de consigne étant au moins périodiquement modifiée en fonction des volumes des propergols restant dans les réservoirs;

c) modification du débit du gaz d'entraînement alimentant au moins une des turbopompes en fonction de l'écart entre le rapport des débits mesurés de propergols et la valeur de consigne de manière à obtenir l'épuisement total des propergols à l'arrêt du fonctionnement du moteur.

2. Procédé selon la revendication 1, caractérisé en ce que la modification du débit du gaz d'entraînement alimentant au moins une des turbopompes est obtenue par modification des débits des propergols alimentant au moins un des générateurs de gaz d'entraînement d'une turbopompe.

3. Procédé selon la revendication 1, caractérisé en ce que la valeur de consigne correspond à un rapport volumétrique des propergols.

4. Régulateur du rapport de mélange des propergols pour la mise en oeuvre du procédé selon la revendication 1, caractérisé en ce qu'il comporte:

— un dispositif électronique (39) de traitement des mesures;

— au moins un détecteur de niveau (10) dans chaque réservoir (4, 5) des propergols, transmettant des signaux au dispositif électronique;

— des débitmètres (H, O) disposés à la sortie des turbopompes à propergols alimentant la chambre de combustion (18) du moteur et transmettant les mesures au dispositif électronique (39);

— un dispositif amplificateur (40) recevant un signal de commande élaboré par le dispositif électronique;

— un dispositif moteur (41) commandé par le dispositif amplificateur;

— une vanne de réglage (VRO, 32, 34, 38) contrôlant directement ou indirectement le débit de gaz d'entraînement d'au moins une turbopompe, ladite vanne étant actionnée par le dispositif moteur (41).

5. Régulateur selon la revendication 4, caractérisé en ce que la vanne de réglage (VRO) est disposée entre les deux canalisations d'alimentation en un même propergol de deux générateurs de gaz d'entraînement (151, 152; 35, 36; GH, GO) pour régler la circulation de propergol entre les deux.

6. Régulateur selon la revendication 4, caractérisé en ce que la vanne de réglage (43) est disposée entre les sorties de gaz des deux turbines (11, 12) des turbopompes (13, 14).

7. Régulateur selon la revendication 4, caractérisé en ce que la vanne de réglage est disposée entre les entrées de gaz de deux turbines des turbopompes.

8. Régulateur selon la revendication 4, caractérisé en ce que le dispositif électronique de traitement des mesures délivre un signal proportionnel à l'écart du rapport de mélange des propergols mesuré et de la valeur de consigne, le dispositif moteur (41) étant commandé proportionnellement audit signal pour modifier le réglage de la vanne de réglage.

9. Régulateur selon la revendication 8, caractérisé en ce que le dispositif moteur est du type vérin fluidique asservi en position.

10. Régulateur selon la revendication 4, caractérisé en ce que le dispositif de traitement des mesures (39) délivre un signal qui commande le dispositif moteur plus ou moins (41) pour obtenir l'ouverture ou la fermeture de la vanne de réglage (VRO, 43).

11. Régulateur selon la revendication 10, caractérisé en ce que le dispositif moteur est une électrovanne.

12. Régulateur selon la revendication 4, caractérisé en ce que les débitmètres (H, O) sont des débitmètres à venturi.

13. Régulateur selon la revendication 4, caractérisé en ce qu'au moins un dispositif à perte de charge est placé en aval des connexions de la vanne de réglage.

**Patentansprüche**

1. Verfahren zur Regelung des Mischungsverhältnisses von Raketentreibstoffen (Propergolen) für einen Motor für flüssige Propergole durch Messung der Durchflussmengen, insbesondere für einen Motor für durch Abkühlung verflüssigte Propergole, wobei die Durchflussmengen der Propergole am Ausgang von Turbopumpen gemessen werden, diese Durchflussmengen mit einem Sollwert verglichen werden und auf die Drehgeschwindigkeit der Turbinen der Turbopumpen eingewirkt wird, gekennzeichnet durch folgende Verfahrensschritte:

a) Messen der Durchflussmengen der Propergole am Ausgang der Turbopumpen;

b) Vergleich des Verhältnisses der Durchflussmengen mit einem Sollwert, der dem Optimalwert der Mischung entspricht, wobei der Sollwert wenigstens zeitweise in Abhängigkeit von den in den Tanks verbleibenden Propergolvolumina verändert wird;

c) Veränderung der Durchflussmenge des mindestens eine der Turbopumpen speisenden Antriebsgases in Abhängigkeit von der Abweichung des Verhältnisses zwischen den gemessenen Durchflussmengen an Propergolen und dem Sollwert derart, dass bei Beendigung der Arbeit des Raketenmotors das Propergol vollständig verbraucht ist.

2. Verfahren nach Anspruch 1, dadurch gekennzeichnet, dass die Änderung der Durchflussmenge des mindestens eine der Turbopumpen speisenden Antriebsgases durch Änderung der Durchflussmengen an Propergolen, die wenistens einen der Generatoren für das Antriebsgas einer Turbopumpe speisen, bewirkt wird.

3. Verfahren nach Anspruch 1, dadurch gekennzeichnet, dass der Sollwert einem volumetrischen Verhältnis des Propergole entspricht.

4. Regler für das Mischungsverhältnis von Propergolen für die Durchführung des Verfahrens nach Anspruch 1, gekennzeichnet durch:

— einen elektronischen Rechner (39) für die Verarbeitung der Messungen;

— wenigstens einen Füllstands-Detektor (10) in jedem Tank (4, 5) für Propergole, der Messsignale an den Rechner überträgt;

— Durchflussmesser (H, O), die am Ausgang der Turbopumpen angeordnet sind, die Propergole zur Verbrennungskammer (18) des Raketenmotors fördern, welche Durchflussmesser ihre Messungen auf den Rechner (39) übertragen;

— einen Verstärker (40), der ein vom Rechner ermitteltes Steuersignal aufnimmt;

— einen vom Verstärker gesteuerten Stellmotor (41);

— ein Regelventil (VRO, 32, 34, 38), das die Durchflussmenge des Antriebsgases für mindestens eine Turbopumpe direkt oder indirekt steuert, wobei das Regelventil durch den Stellmotor (41) betätigbar ist.

5. Regler nach Anspruch 4, dadurch gekennzeichnet, dass das Regelventil (VROP) zwischen den beiden, das gleiche Propergol führenden Speisungsleitungen zu zwei Antriebsgas-Generatoren (151, 152; 35, 36; GH, GO) angeordnet ist, um die Zirkulation des Propergols zwischen den beiden Speisungsleitungen zu regeln.

6. Regler nach Anspruch 4, dadurch gekennzeichnet, dass das Regelventil (43) zwischen den Gasauslässen von zwei Antriebsturbinen (11, 12) für Turbopumpen (13, 14) angeordnet ist.

7. Regler nach Anspruch 4, dadurch gekennzeichnet, dass das Regelventil zwischen den Gaseintritten von zwei Antriebsturbinen für Turbopumpen angeordnet ist.

8. Regler nach Anspruch 4, dadurch gekennzeichnet, dass der elektronische Rechner für die Verarbeitung der Messungen ein Signal abgibt, das proportional zur Abweichung des Mischungsverhältnisses der gemessenen Propergole vom Sollwert ist und dass der Stellmotor (41) proportional zu dem genannten Signal gesteuert wird um die Einstellung des Regelventils zu ändern.

9. Regler nach Anspruch 8, dadurch gekennzeichnet, dass der Stellmotor ein hydraulischer Kraftheber ist, der in bestimmte Stellungen bringbar ist.

10. Regler nach Anspruch 4, dadurch gekennzeichnet, dass der Rechner (39) zur Verarbeitung der Messungen ein Signal abgibt, das den Stellmotor (41) mehr oder weniger ansteuert um die Öffnung oder die Schliessung des Regelventils (VRO, 43) zu erhalten.

11. Regler nach Anspruch 10, dadurch gekennzeichnet, dass der Stellmotor ein Elektromagnet ist.

12. Regler nach Anspruch 4, dadurch gekennzeichnet, dass die Durchflussmesser (H, O) Venturi-Durchflussmesser sind.

13. Regler nach Anspruch 4, dadurch gekennzeichnet, dass stromabwärts der Anschlüsse des Regelventils wenigstens eine Drosseleinrichtung angeordnet ist.

**Claims**

1. Process for the control system of the mixture ratio of propergols for a liquid propergol motor by measuring flows, and more particularly for a cryogenic motor, which process consists in measuring the flow of the propergols at the outlet of the turbopumps, comparing it with a set value, and acting on the speed of the turbines of the turbopumps characterised in that it comprises the following operations:

a) measurement of the flows of the propergols at the outlet of the turbopumps;

b) comparison of the ratio of the flows measured with a set value corresponding to the optimum value of the mixture, the set value being at least periodically modified in dependence on the volumes of the propergols remaining in the tanks;

c) modification of the flow of driving gas supplying at least one of the turbopumps in dependence on the difference between the ratio of the measured flows of propergols and the set value in such a manner as to achieve the complete exhaustion of the propergols when the operation of the motor is terminated.

2. Process according to claim 1, characterised in that the modification of the flow of driving gas supplying at least one of the turbopumps is achieved by modification of the flows of the propergols supplying at least one of the driving gas generators of a turbopump.

3. Process according to claim 1, characterised in that the set value corresponds to a volumetric ratio of the propergols.

4. Controller for the mixture ratio of propergols for carrying out the process according to claim 1, characterised in that it comprises:

— an electronic device (39) for processing the measurements;

— at least one detector of the level (10) in each tank (4, 5) of the propergols, transmitting signals to the electronic device;

— flow meters (H, O) disposed at the outlet of the propergols turbopumps supplying the combustion chamber (18) of the motor, and transmitting the measurements to the electronic device (39);

— an amplifier device (40) receiving a control signal produced by the electronic device;

— a motor device (41) controlled by the amplifier device;

— a control valve (VRO, 32, 34, 38) directly or indirectly controlling the flow of driving gas of at least one turbopump, this valve being operated by the motor device (41).

5. Control system according to claim 4, characterised in that the control valve (VRO) is disposed between the two pipes supplying the same propergol to two driving gas generators (151, 152; 35, 36; GH, GO) in order to control the circulation of propergol between the two.

6. Control system according to claim 4, characterised in that the control valve (43) is disposed between the gas outlets of the two turbines (11, 12) of the turbopumps (13, 14).

7. Control system according to claim 4, characterised in that the control valve is disposed between the gas inlets of two turbines of the turbopumps.

8. Control system according to claim 4, characterised in that the measurement processing electronic device supplies a signal proportional to the difference between the propergol mixture ratio measured and the set value, the motor device (41) being controlled proportionally to the said signal in order to modify the adjustement of the control valve.

9. Control system according to claim 8, characterised in that the motor device is of the fluidic actuator type controlled in respect of position.

10. Control system according to claim 4, characterised in that the measurement processing device (39) supplies a signal which controls the plus or minus motor device (41) in order to effect the opening or closing of the control valve (VRO, 43).

11. Control system according to claim 10, characterised in that the motor device is an electrovalve.

12. Control system according to claim 4, characterised in that the flow meters (H, O) are venturi flow meters.

13. Control system according to claim 4, characterised in that at least one pressure loss device is disposed downstream of the connection of the valve.

FIG.:1

FIG.: 2

FIG.: 3

FIG.: 4

FIG.: 5

FIG.: 6

FIG.:7

FIG.:8

FIG.: 9

FIG.: 10

FIG.:11